# EUROPEAN PATENT APPLICATION

(11) **EP 2 374 610 A1**
(43) Date of publication of application: **12.10.2011**
(21) Application number: 11161745.2
(22) Date of filing: 08.04.2011
(51) Int. Cl.: B31B 1/74, B31B 19/14, B31B 19/90, B65D 75/00, B32B 38/04

(54) **Method for manufacturing a laminated beverage packaging**

(30) Priority: 09.04.2010 NL 2004532
(71) Applicant: Dukka B.V., 2583 DX Den Haag (NL)
(72) Inventor: van Doorne, Cornelis Johannes, 2692 DJ 's-Gravenzande (NL); Demeri, Ejup, 2512 EX Den Haag (NL)
(74) Representative: van Westenbrugge, Andries

(57) **Abstract**

The invention is related to a method for the manufacture of a beverage packaging of the type that comprises a foil material and which may be provided with a straw for puncturing the foil material to gain access to the contents. This is achieved by means of a method, comprising the sequential steps of:
- providing a first layer of printed foil material;
- applying a perforation in the first layer of foil material; and
- laminating the first layer of foil material with a second layer of foil material to form a laminate.

The invention further relates to a beverage package of this type.

## Description

The invention is related to a method for the manufacture of a beverage packaging of the type that comprises a foil material and which may be provided with a straw for puncturing the foil material to gain access to the contents. The invention further relates to a beverage package of this type.

A known method of manufacture is disclosed in the US patent 4762514. This patent describes a beverage packaging in the shape of a bag, whereby the bag consists of a pair of mutually bonded individual panels consisting of layers. The panels consist of an inner layer and an outer layer, whereby each of these layers again consists of multiple layers. Each panel is formed by the mutual bonding of the inner and the outer layer. One of the panels is provided with several radially extending cuts applied in the outermost layer. The cuts are applied by means of laser technique whereby the depth of the cut can be precisely controlled to avoid puncturing through to the inner layer. By way of the radially extending cuts the outer layer is weakened in such a way that a drinking straw can be pushed through the layers. The use of a laser in this manner is relatively costly and the accuracy of the result may be dependent upon the tolerances of the foils used.

Aim of the invention is to provide a method for the manufacture of a beverage packaging, whereby the above mentioned disadvantages are corrected.

This is achieved by means of a method for the manufacture of a beverage packaging comprising at least one panel whereby the at least one panel comprises at least a first layer of printed foil material and a second layer of foil material, comprising the sequential steps of:
- providing a first layer of printed foil material;
- applying a perforation in the first layer of foil material; and
- laminating the first layer of foil material with a second layer of foil material to form a laminate.

The applied perforation is preferably a circular shaped perforation in the first layer of foil material and is applied after the step of printing the first layer of foil material, whereby the step of applying the perforation is followed by laminating the first layer of foil material with the second layer of foil material. It will be understood that other shapes of perforation may also be formed as required. Since the first layer is perforated prior to lamination with the second layer, the perforation may easily be made completely through the first layer without risk of damage to the second layer.

The method may additionally comprise laminating the first and second layers with a third layer of foil material. It will be understood that the third layer may be laminated to the second layer prior to, during or after laminating the first and second layers together.

The first layer of foil material can either be provided as a blank foil, on which a print will be provided during a step of the described method, or as a ready-printed foil. In either case, the perforations may be aligned relative to the applied printing e.g. by reference marks or elements for the perforation machine. These may be located at the top and/or on either side of the printed area.

The circular shaped perforations may be made at a predetermined spacing, in the first layer of foil material, whereby the perforations are aligned relative to the applied printing.

For assembling the laminate for the panels of the beverage packaging the method comprises the step of applying a connecting layer, preferably an adhesive layer, to the layers of foil material being laminated. Preferably, the adhesive layer is applied to the first layer of foil material, after which the first layer of foil material is pressed against the second layer of foil material. In this way it is prevented that at the location of the perforation adhesive is at the surface, which might cause the laminate to stick together during rolling up.

The first outer layer of foil material functions as a strengthening layer. By applying a perforation only through the first outer layer of foil material, a drinking straw can be pushed through the remaining layers more easily.

Furthermore, the method comprises after the step of laminating, the step of degassing of the layers of foil material. This takes place simultaneously with curing the adhesive layers between the foils. For this, the foil is put in a warm room with a temperature of about 30-40 degrees Celsius for about 96 hours.

Subsequently the method as described above comprises after the step of laminating the foils, the steps of:
- cutting out the at least one panel, preferably two panels, from the laminate;
- bonding the innermost layers of foil material of the panel or panels to form a pouch, whereby an opening is retained at an upper side of the pouch. Through this opening the beverage packaging can be filled with a liquid and subsequently closed.

With the above described method a beverage packaging is manufactured comprising first and second mutually bonded sides, formed of at least one panel, preferably two panels, whereby each of the sides is formed of a laminate comprising at least an outer layer of foil material and an inner layer of foil material, preferably a first outer layer of foil material, a second layer of foil material as well as a third inner layer of foil material, whereby the first layer of foil material of at least one of the sides is provided with a print, whereby one of the sides is provided with a perforation, preferably a circle, aligned relative to the print.

Preferably, the first outer layer consists of a polymer foil, for example a polyethylene foil.

Furthermore, it is preferred that a third inner layer is provided, also consisting of a polymer foil and whereby the inner foil material is for example a polyethylene terephthalate foil.

The second layer of foil material consists of a metallic foil, for example aluminum.

The invention will now be described with reference to the embodiments shown in the accompanying drawings.
Figure 1 shows a front view of the preferred embodiment of the beverage packaging.
Figure 2 shows a cross-section of the preferred embodiment of the device of Figure 1 along II.

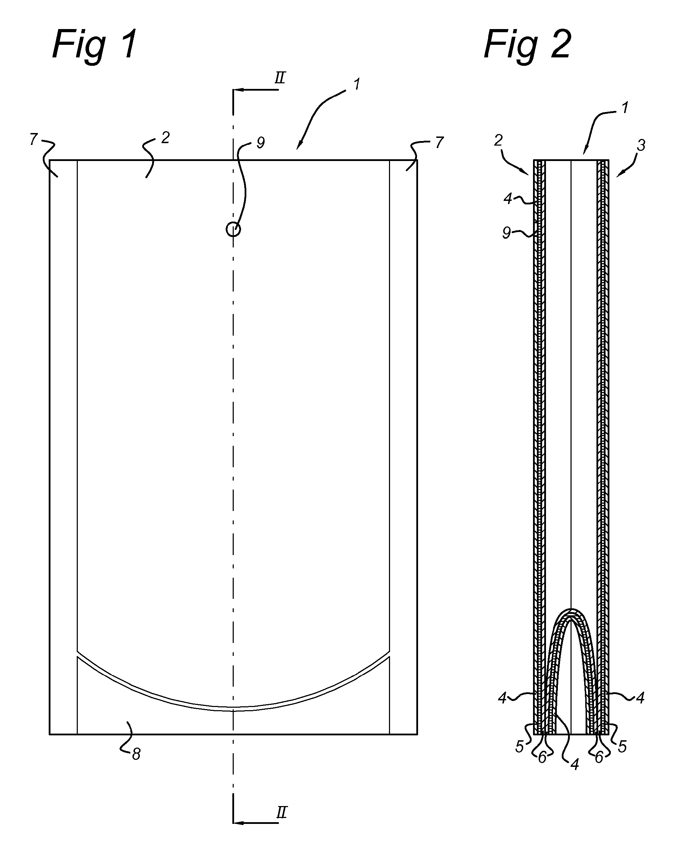

Figure 1 shows a front view of the preferred embodiment of the beverage packaging 1. The beverage packaging is formed from two panels 2, 3, which are bonded together by bonding side edges 7 and at the bottom by bonding edge 8. One of these panels 2, 3, in this case the frontmost panel 2, is provided with a circular shaped perforation 9 in a first outer layer 4.

Figure 2 shows a cross-section of the preferred embodiment shown in Figure 1. In this figure the layered structure of each of the panels 2, 3 consisting of the first layer 4, a second layer 5 and a third layer 6, is clearly shown.

At the frontmost panel 2 a circular shaped perforation 9 is applied through the first layer 4. Moreover, the first layer 4 is provided with a print, which is not shown in the figures.

During manufacturing of the beverage packaging the first layer 4 is provided from a roll (not shown) having a width sufficient for manufacturing a number of panels in parallel. The first layer 4 is printed with for example a solvent based ink, after which the perforations 9 are applied mechanically at a predetermined spacing corresponding to the desired positions of the straw openings for each panel. The perforations are formed completely through the first layer 4, by means of a mechanical perforation apparatus, such as a punching machine or a spike cutter. The resulting location of the perforation is determined by alignment relative to the previously applied print.

The laminating step is performed in two sub-steps. After applying perforation 9 an adhesive layer is applied on the first layer 4. On this adhesive layer the second layer 5 is laid. The third layer 6, is also provided with an adhesive layer and is laid on the second layer 5. The adhesive layers provide the mutual bonding of the layers of foil material.

After laminating the resulting laminate is rolled up into a roll and is transported to a warm room at a temperature of about 30 to 40 degrees Celsius, preferably 35 degrees Celsius, where the foils can degas and the adhesive layer can harden or cure during a certain time period, preferably about 96 hours. Because the adhesive layer is applied to the first layer 4 and not to the second layer 5, no adhesive layer is present at the location of the perforation 9 in the first layer 4. During rolling up of the laminate, the first layer 4 will remain free of adhesive and the laminate can be unrolled easily from the roll.

Subsequently, the panels 2, 3 are cut out from the laminate. The inner third layers 6 of the panels 2, 3 are then bonded to form a pouch with an opening at the upper side. Through this opening the beverage packaging 1 can be filled with a liquid and subsequently the opening is closed.

The first and third layers 4, 6 consist of a polymer foil. The first layer 4 functions as a strengthening layer of the packaging and can consist of polyethylene (PE). The second layer 5 functions as a light-proof and air tight layer and can consist of a metallic foil, for example aluminum. The third layer 6 is a protection layer for the second layer of foil material and can consist of polyethylene terephthalate (PET). In this way, the ink of the print on the first layer of foil material will not be in contact with the liquid inside the beverage packaging.

### List of parts

1. Beverage packaging
2. Panel
3. Panel
4. First and outer layer of foil material
5. Second layer of foil material
6. Third and inner layer of foil material
7. Bonding side edge
8. Bonding edge
9. Circular shaped perforation

## Claims

1. Method for the manufacture of a beverage packaging (1) comprising at least one panel (2, 3), whereby the at least one panel (2, 3) comprises at least a first layer of printed foil material (4) and a second layer of foil material (5), the method comprising the sequential steps of:
- providing the first layer of printed foil material (4);
- applying a perforation (9) in the first layer of foil material (4);
- laminating the first layer of foil material (4) with the second layer of foil material (5) to form a foil laminate.

2. Method according to claim 1, comprising the step of laminating the second layer of foil material (5) with a third layer of foil material (6).

3. Method according to claim 1 or 2, whereby the step of providing the first layer of printed foil material (4) comprises the steps of:
- providing a first layer of foil material (4); and
- applying a print on the first layer of foil material (4).

4. Method according to any of the preceding claims, whereby the step of applying a perforation comprises the step of making perforations (9) at predetermined spacings in the first layer of foil material (4).

5. Method according to any of the preceding claims, comprising the step of aligning the perforations (9) at predetermined locations relative to an applied print of the printed foil material.

6. Method according to any of the preceding claims, comprising the step of applying an adhesive layer to at least one of the layers of foil material (4, 5, 6) being laminated.

7. Method according to claim 4, whereby the adhesive layer is applied to the first and third layers of foil material (4, 6).

8. Method according to any of the preceding claims, comprising after the step of laminating; the step of degassing of the layers of foil material (4, 5, 6).

9. Method according to any of the claims 6 to 8, comprising after the step of laminating the foils (4, 5, 6); the step of curing the adhesive layers between the foils (4, 5,6).

10. Method according to any of the preceding claims, comprising after the step of laminating the foils (4, 5, 6), the steps of:
- cutting out the panel (2, 3) from the foil laminate;
- bonding innermost layers of foil material (4) of the panel to itself or to another panel (2, 3) to form a pouch, whereby an opening is retained at an upper side of the pouch.

11. Beverage packaging manufactured according to the method of any of the preceding claims, comprising first and second mutually bonded sides (2, 3), whereby each of the sides is formed of a laminate comprising at least an outer layer of foil material (4) and an inner layer of foil material (6) , whereby the outer layer of foil material (4) of at least one of the sides is provided with a print, **characterized in that** the at least one of the sides is provided with a perforation aligned relative to the print and passing through the outer layer.

12. Beverage packaging according to claim 11, wherein the laminate comprises a first outer layer of foil material (4), a second layer of foil material (5) and a third inner layer of foil material (6) and the outer and inner layer of foil material (4, 6) consist of a polymer foil.

13. Beverage packaging according to claim 12, whereby the outer layer of foil material (4) is a polyethylene foil.

14. Beverage packaging according to claims 12 or 13, whereby the inner layer of foil material (6) is a polyethylene terephthalate foil.

15. Beverage packaging according to one of the claims 11-14, whereby the second layer (5) consists of a metallic foil, such as aluminum.
